# EUROPEAN PATENT SPECIFICATION

(11) **EP 2 695 056 B1**
(45) Date of publication and mention of the grant of the patent: **27.09.2017**
(21) Application number: 11862633.2
(22) Date of filing: 21.11.2011
(51) Int. Cl.: G06F 9/44, G06F 9/305, G06F 13/14, G06F 3/01, H04W 52/02, G06F 1/32, G06F 9/50

(54) **MECHANISM FOR OUTSOURCING CONTEXT-AWARE APPLICATION-RELATED FUNCTIONALITIES TO A SENSOR HUB**
MECHANISMUS ZUM OUTSOURCEN VON KONTEXTBEWUSSTEN ANWENDUNGSBEZOGENEN FUNKTIONENAUF EINEN SENSORHUB
MÉCANISME POUR EXTERNALISER DES FONCTIONNALITÉS RELATIVES À UNE APPLICATION SENSIBLE AU CONTEXTE, À UN CONCENTRATEUR DE CAPTEURS

(30) Priority: 01.04.2011 US 201113078268
(43) Date of publication of application: 12.02.2014
(73) Proprietor: Intel Corporation, Santa Clara, CA 95054 (US)
(72) Inventor: NACHMAN, Lama, Santa Clara California 95051 (US); RAFFA, Giuseppe, Portland Oregon 97229 (US); ESSAIAN, Alexander, San Jose California 95123 (US); SHAH, Rahul C., San Francisco California 94115 (US)
(74) Representative: Rummler, Felix
(86) International application number: PCT/US2011/061725
(87) International publication number: WO 2012/134546

(56) References cited:
- WO-A1-2010/141878
- US-A1- 2007 004 436
- US-A1- 2008 248 789
- US-B2- 7 319 908

## Description

### FIELD

The field relates generally to computing devices and, more particularly, to employing a mechanism for outsourcing context-aware application-related functionalities to a sensor hub.

### BACKGROUND

Context-aware software applications are becoming popular in handheld and mobile computing devices. Context-aware applications provide a new compute paradigm as it decouples computing from device usage and thus, the existing approach of "turning devices off" when the user is not interacting with these devices to improve battery life does not work. This is because a user's context is related to the user's daily life phases (e.g., user activity, user location, user social interaction, user emotional state, etc.), the mobile devices having context-aware applications have to continuously capture the user's context (even when the user "turns the device off") which keeps the computing devices working and consuming power.

For example, a pedometer application is designed to measure the steps a user takes throughout the day irrespective of how the mobile device having the pedometer application is used. To accomplish the pedometer application's requirements, various device sensors (e.g., accelerometer, gyroscope, compass, etc.) would have to be sensing the user's movement (e.g., steps) for extended periods of time (thus, continuously consuming power) even when the mobile device is supposedly "turned off" and resting in the user's pocket. Unlike a typical mobile phone which turns off when the user is not interacting with the phone, mobile computing devices having context-aware applications have to stay on and be constantly in use in order to continuously capture sensor data throughout the day. Context-aware applications consume a great deal of power which requires computing device batteries to be charged multiple times a day.

WO 2010/141878 A1 describes a method and system pertaining to the features of the preamble of the independent claims.

### SUMMARY OF THE INVENTION

The invention can best be summarized by the provisioning of a method according to claim 1, a system according to claim 6 and a computer readable medium according to claim 10. Advantageous further features of the embodiments are as specified in the dependent claims 2-5 and 7-9.

### BRIEF DESCRIPTION OF THE DRAWINGS

Embodiments of the present invention are illustrated by way of example and not by way of limitation in the figures of the accompanying drawings, in which like references indicate similar elements and in which:
FIG. 1 illustrates a computing device employing a sensor hub according to one embodiment of the invention;
**Figure 2** illustrates a sensor hub having sensor hub hardware according to one embodiment of the invention;
**Figures 3A** and **3B** illustrate an embodiment of a sensor hub having sensor hub software according to one embodiment of the invention;
**Figure 4** illustrates a method for outsourcing processor context-aware application-related functions to a sensor hub according to one embodiment of the invention; and
**Figure 5** illustrates a computing system according to one embodiment of the invention.

### Detailed Description

Embodiments of the invention provide a mechanism for outsourcing context-aware application-related activities to a sensor hub. A method of embodiments of the invention includes outsourcing a plurality of functionalities from an application processor to a sensor hub processor of a sensor hub by configuring the sensor hub processor, and performing one or more context-aware applications using one or more sensors coupled to the sensor hub processor.

In one embodiment, a sensor hub is provided that consists of a low power sensing subsystem (e.g., a processor, sensors, a combination of hardware and software, etc.) that operates when the application processor of a computing device is asleep and responsible for offloading multiple functionalities from the application processor to a sensor hub processor at a much lower power than if these functions were performed in the application processor. Further and in one embodiment, the sensor hub supports a wide range of context-aware applications through exposing a set of power efficient primitives to provide the necessary flexibility to configure the sensor hub for a wide range of context capabilities, while maintaining a low power requirement. The novel sensor hub overcomes the conventional power-related problems associated with conventional systems that require context-aware application-related sensors to be directly connected to application processors which consumes great deal of power and significantly lowers battery life.

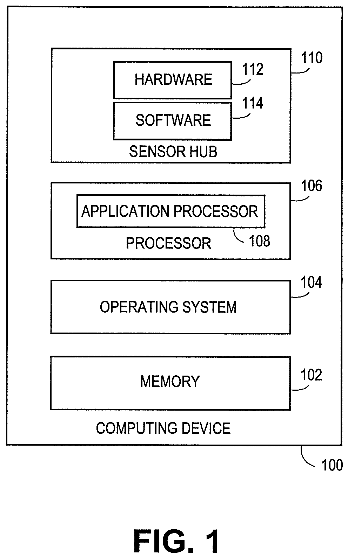

**Figure 1** illustrates a computing device 100 employing a sensor hub 110 according to one embodiment of the invention. The computing device 100 may include a mobile device (e.g., a smartphone, a handheld device, a tablet, a laptop, etc.) having an operating system 104 serving as an interface between any hardware or physical resources of the computing device 100 and a user. The computing device 100 may further include a processor 106, memory devices 102, network devices, drivers, or the like. The processor 106 may include an application processor (circuitry) 108 that is provided to serve the computing device 100. The application processor 108 may include a Mobile-Internet Device (MID)-capable processor, such as Moorestown® that is based on Lincroft system-on-a-chip (SOC) with an Atom® processor core, etc., to perform various tasks, such as advanced context processing, etc. In one embodiment, as will be explained later in this document, the application processor 108 may be given the authority and capability to configure the sensor hub (using the sensor hub hardware and/or software), as desired or necessitated, to perform various context-aware application-related functionalities (that are performed by the application processor) using a number of sensors coupled to the sensor hub processor to perform the functionalities using much lower amount of power (as opposed to when similar functionalities are performed by the application processor). It is to be noted that terms like "machine", "device", "computer" and "computing system" are used interchangeably and synonymously throughout this document.

In one embodiment, the computing device 100 further includes a sensor hub 110 having hardware (architecture) 112 and software (architecture) 114 in communication with the application processor 108 to perform various context-aware application-related functionalities, such as sensor data capturing, triggering, processing, filtering, streaming, storing, forwarding, calibrating, etc., are provided as primitives. These functionalities are outsourced, such as offloaded from the application processor 108 to the sensor hub 110 and are performed in a way that is flexible enough to allow for the changing needs of context-aware applications. In other words, in one embodiment, the primitives may run at the sensor hub 110 but are configured from and by the application processor 108 through a protocol, such as a sensor hub application programming interface (API).

Considering a real-life context-aware application example, a context-aware application is triggered as it requests "gesture recognition". This request gets routed to the middleware running on the interactive application (IA) application processor 108. The middleware then configures the sensor hub 110 to capture data from, for example, the accelerometer, trigger the gyroscope if movement is detected from the accelerometer, perform gesture spotting on the sensor hub 110, and send data to the middleware if these conditions are satisfied. The middleware on the application processor then runs an algorithm (e.g., hidden Markov model (HMM) algorithm) anytime it receives the data and performs the final gesture recognition and decide that a user just performed a "shake" gesture. In other words, in one embodiment, the primitives (e.g., trigger, capture, and processing) are configured by the middleware running on the IA application processor 108, but they are implemented in the sensor hub software 114 of the sensor hub 110, exposed through a sensor hub API at the application processor 108, and requested, triggered, and configured through the application processor 108, as will be described with reference to the subsequent figures.

As will be explained subsequently in this document, the sensor hub hardware 112 may include a general-purpose low power processor (e.g., STMicro Cortex, etc.) that is coupled to a number of sensors (e.g., 3D accelerometer, gyroscope, compass, barometer, etc.) working in concert with the sensor hub software 114 to perform functionalities relating to various context-aware applications to lower the power requirement of the computing device 100.

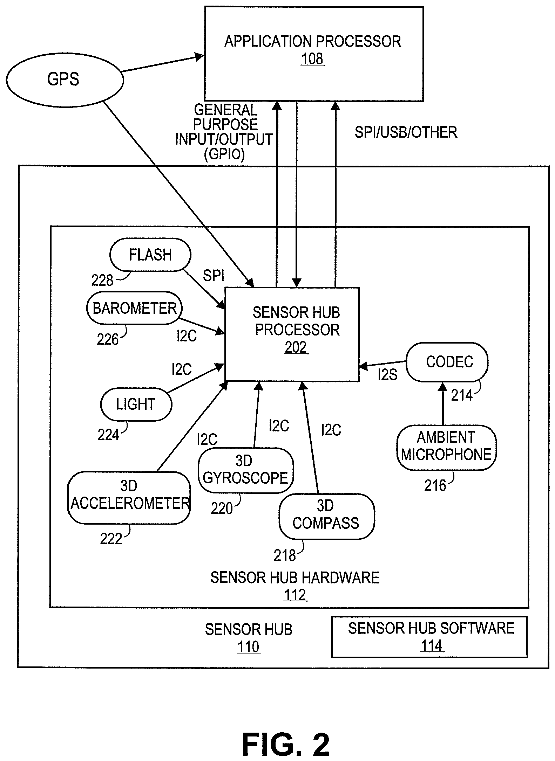

**Figure 2** illustrates a sensor hub 110 having sensor hub hardware 112 according to one embodiment of the invention. In one embodiment, the sensor hub 110 includes the sensor hub hardware 112 and sensor hub software 114. Sensor hub hardware 112 includes a general-purpose low power sensor hub processor 202 (e.g., Cortex M3) that can operate at extremely low current (e.g., micro-amps to milli-amps range) and be scaled up dynamically based on the processing needs. In one embodiment, various sensors 214-228 relating to context-aware applications are placed within the sensor hub hardware 112 as they are connected to the sensor hub processor 202 using, for example, standard interfaces, such as Inter-Integrated Circuit (I²C) interface, Serial Peripheral Interface (SPI), General Purpose Input/Output (GPIO), Universal Asynchronous Receiver/Transmitter (UART), analog, wireless, etc. Further, in one embodiment, the sensor hub processor 202 is connected to and placed in communication with the application processor 108 through a set of interfaces (e.g., SPI, Universal Serial Bus (USB), GPIO, etc.) and maintains access to shared memory space. Although, in the illustrated embodiment, the sensor hub processor 202 is shown as a separate processor, it is contemplated that in another embodiment, the sensor hub processor 202 may be placed as a core processor within the application processor 108 or, in yet another embodiment, within a chipset (e.g., an Atom® chipset, a Platform Controller Hub (PCH), etc.), or the like.

In one embodiment, the sensor hub processor 202 serves as an intermediate level processing agent within a processing hierarchy, such as between the sensors 214-228 and the application processor 108. This intermediate level agent mitigates the need for the application processor 108 to keep polling and processing sensor data (e.g., collecting sensor data and comparing it to a threshold) by allowing the application processor 108 to outsource the aforementioned tasks relating to sensor data to the sensor hub processor 202. Further, the sensor hub processor 202 provides the flexibility and programmability beyond what is typically offered by the sensors 214-228 when they are configured to work directly with the application processor 108 without the sensor hub processor 202.

It is contemplated that the sensor hub processor 202 may be employed to work with any number and type of sensors 214-228 depending on the nature and function of a context-aware application. For example, a context-aware application, like a pedometer application, may require certain sensors (such as a 3d accelerometer 222, 3d gyroscope 220, etc.) while another context-aware applications, like a camera application, may not require the exact same sensors that the pedometer application may require and *vice versa.* Some examples include an ambient microphone 216 (e.g., a Knowles ambient microphone) that is associated with a CODEC 214 (e.g., a Maxim CODEC) that is used for data conversion between the ambient microphone 216 and the sensor hub processor 202, a 3d compass 218 (e.g., a Honeywell compass), a 3d gyroscope 220 (e.g., an Invense gyroscope), a 3d accelerometer 222 (e.g., an STMicro accelerometer), a light sensor 224 (e.g., an Intersil light sensor), a barometer 226, and a flash 228, etc. In addition to the aforementioned physical sensors 214-228, various virtual sensors may be supported by the sensor hub processor 202. These virtual sensors (e.g., orientation_xy, orientation_z, heading from inertial measurement, noise level, etc.) may be calculated or obtained using sensor data obtained from the physical sensors 214-228.

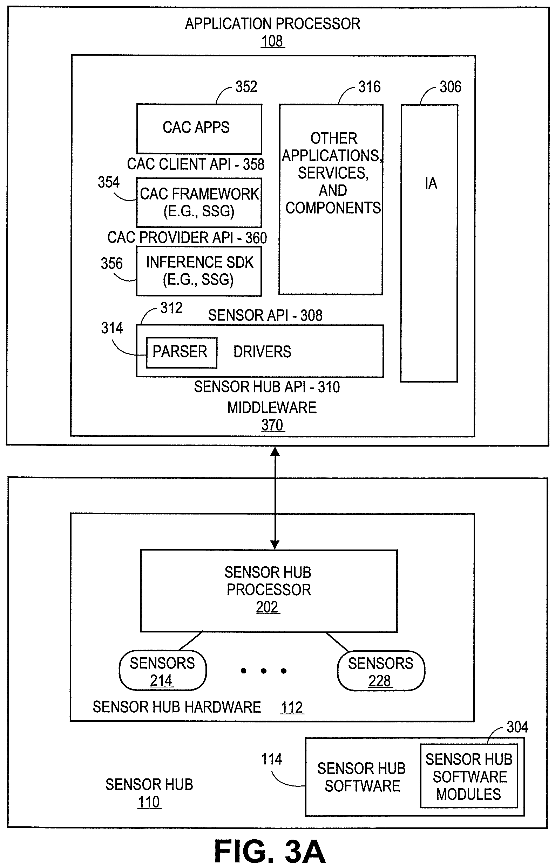

As will be further described with reference to **Figures 3A-3B****,** in one embodiment, any number and types of software modules are employed as part of the sensor hub software 114 at the application processor 108 to facilitate the sensor hub processor 202 to, dynamically or on-demand, adopt certain capabilities to perform various functionalities or activities. These functionalities that are provided through software modules that may be referred to as sensor hub primitives. In one embodiment, various context-aware application-related functionalities, such as sensor data capturing, triggering, processing, filtering, streaming, storing, forwarding, calibrating, etc., are provided as primitives and are outsourced, such as offloaded from the application processor 108 to the sensor hub 110 and are performed in a way that is flexible enough to allow for the changing needs of context-aware applications. In other words, in one embodiment, the primitives may run at the sensor hub 110 but are configured from and by the application processor 108 through a protocol, such as a sensor hub API. In other words, in one embodiment, the primitives (e.g., trigger, capture, processing, capturing, filtering, etc.) are configured by the middleware running on the IA application processor 108, but they are implemented in the sensor hub software 114 of the sensor hub 110, exposed through a sensor hub API at the application processor 108, and requested, triggered, and configured through the application processor 108, as will be described with reference to the subsequent figures.

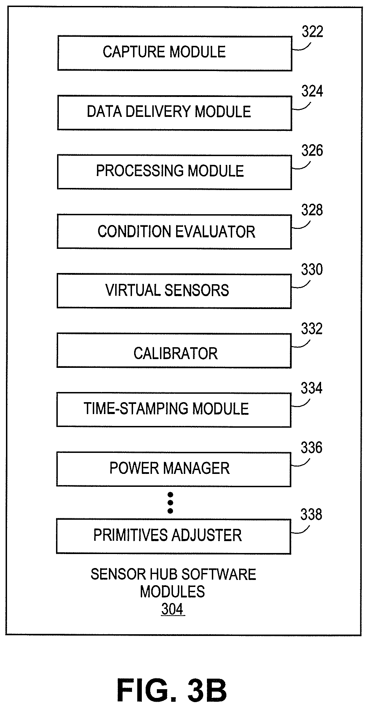

In one embodiment, certain default primitives may be initially provided as part of the sensor hub 110, such as at the time of manufacturing of the computing device having the sensor hub 110 and the application processor 108. However, with time, certain primitives (corresponding to these functionalities or capabilities) may be added to (or removed from) the sensor hub software 114. If, for example, a new primitive (e.g., adding a new component) representing a new functionality (e.g., capability to add) is added to the sensor hub software 114, the sensor hub software 114 then facilitates the application processor 108 the ability to dynamically or on-demand (re)configure the sensor hub processor 202 to adopt this new functionality to be used in future transactions relating to context-aware applications. Similarly, the sensor hub processor 202 may be dynamically or on-demand (re)configured (by the application processor 108 as facilitated by sensor hub software 114) to be free of a particular functionality (e.g., calibration) if the corresponding primitive (e.g., calibrator) is removed from the list of primitives offered by the sensor hub software 114. In one embodiment, dynamic configuration refers to dynamic running and stopping of any number or combination of primitives. For example, capture of data may be started using the accelerometer 222 and stopped anytime thereafter; however, the capture primitive (e.g., the capture module 322 of **Figure 3B**) may nevertheless remain intact, but just not exercised (e.g., remain idle until needed again). Further, an event can be initiated to be monitored, but if, for example, accelerometer data reaches or exceeds a particular threshold, either the application processor 108 may be awaken or the event can be removed. Moreover, certain primitives may be added or removed through an expansion of sensor hub functionalities by modifying the sensor hub software 114 that runs on the sensor hub 110 and adding the new primitives to the APIs (e.g., sensor hub API 310 of **Figure 3A**) to allow the application processor 108 to access and utilize the newly added primitives.

**Figures 3A** and **3B** illustrate an embodiment of a sensor hub 110 having sensor hub software 114 according to one embodiment of the invention. As mentioned previously with reference to **Figure 2****,** a number of primitives (also referred to as "activity modules", "capability modules", "functionalities modules", etc.) may be employed as part of the sensor hub software 114 and sensor hub software modules 304 to facilitate the application processor 108 to configure the sensor hub processor 202 to adopt relevant capabilities and perform various corresponding context-aware application-related functionalities.

In one embodiment, the computing device 100 further includes a sensor hub 110 having hardware (architecture) 112 and software (architecture) 114 in communication with the application processor 108 to perform various context-aware application-related functionalities, such as sensor data capturing, triggering, processing, filtering, streaming, storing, forwarding, calibrating, etc. These functionalities may be provided and recognized as primitives. These functionalities are outsourced, such as offloaded from the application processor 108 to the sensor hub 110 and are performed in a way that is flexible enough to allow for the changing needs of context-aware applications. In other words, in one embodiment, the primitives run at the sensor hub 110 but are configured from and by the application processor 108 through a protocol, such as a sensor hub API. In other words, in one embodiment, the primitives (e.g., trigger, capture, processing, capturing, filtering, etc.) are configured by the middleware running on the IA application processor 108, but they are implemented in the sensor hub software 114 of the sensor hub 110, exposed through a sensor hub API at the application processor 108, and requested, triggered, and configured through the application processor 108, as will be described with reference to the subsequent figures.

In one embodiment, this configuration or reconfiguration of the sensor hub processor 202 by the application processor 108 using the primitives may be performed dynamically (e.g., a primitive may be automatically added, edited, or deleted each time a context-aware application or a user gesture triggers a change) or on-demand (e.g., allowing the user to make changes to the primitives by changing settings on the computing device employing the sensor hub 110).

In addition to the primitives (further described with reference to **Figure 3B**), other software/hardware/firmware components are also employed. For example, a sensor hub Application Programming Interface 310 ("API" or simply referred to as "interface") may allow an IA driver 312 (having a content parser 314) associated with the IA 306 to interact with the sensor hub processor 202 for, for example, configuration of the sensor hub processor 202, configuration of data, etc. The drivers 314 may be used to expose a sensor API 308 that that can be used by, for example, an inference engine (e.g., Skin-Skeleton-Guts (SSG) inference Software Developer Kit (SDK)) or directly by applications and services 316 if, for example, raw sensor data is needed. In one embodiment, the sensor API 308 and/or sensor hub API 310 provide an abstraction with the sensor hub software 114 such that when the sensor hub software 114 needs to support different sensors over time, the sensor capabilities that each sensor driver exposes are abstracted with the sensor API 308 and/or sensor hub API 310. This way, for example, if an existing accelerometer of the sensors 214-228 is to be replaced by a new accelerometer, a simple replacement of the sensor driver associated with the existing accelerometer with that of the new accelerometer would be sufficient to expose the same accelerometer API as the existing one (e.g., capture data, lower the power, etc.).

Further, middleware 370 may provide high-level context storage, retrieval, notification, processing of data, etc., and implementation of other applications, services and components 316, such as an inference algorithm implementation, storage of raw sensor data (e.g., high data rate), etc. Similarly, various components, such as the drivers 312, the parsers 314, etc., can be used to provide abstract sensor hub details, support multiple consumers, exercise conflict resolution, etc. Referring back to the "gesture recognition" example described above with reference to **Figure 1****,** once a "gesture recognition" request gets routed to the middleware 370 running on the application processor 108, the middleware 370 configures the sensor hub 110 to capture data from, for example, the accelerometer, trigger the gyroscope if movement is detected from the accelerometer, perform gesture spotting on the sensor hub 110, and send data to the middleware 370 if these conditions are satisfied. The middleware 370 on the application processor 108 then runs an algorithm (e.g., the HMM algorithm) anytime it receives the data and performs the final gesture recognition and decides that a user just performed, for example, a "shake" gesture. The middleware 370 may include some of the components illustrated here, such as IA 306, sensor API 308, sensor hub API 310, drivers 312, other applications, services, and components 316, call admission control (CAC) applications 352, CAC framework 354 (e.g., SSG framework), inference SDK (e.g., SSG inference SDK) 356, CAC client API 358, CAC provider API 360, etc., while parser 314, although associated with drivers 312, may run at the sensor hub 110. As aforementioned, in one embodiment, the primitives (e.g., trigger, capture, processing, capturing, filtering, etc.) provided through the sensor hub software modules 304 are configured by the middleware 370 running on the application processor 108, but they are implemented in the sensor hub software 114 of the sensor hub 110, exposed through a sensor hub API 310 at the application processor 108, and requested, triggered, and configured through the application processor 108.

Referring now to **Figure 3B****,** a number of primitives 322-338 referring to various capabilities and/or functionalities are provided as software modules 304 and are associated with the sensor hub processor 202 through the sensor hub API 310 allowing the application processor 108 to (re)configure the sensor hub processor 202 based on the various necessities and/or requirements of a context-aware application. It is contemplated that various functionalities associated with the primitives 322-338 illustrated here are merely listed as examples for brevity and ease of understanding, but that any number of other functionalities can be added to (or removed from) the list of primitives 322-338.

In one embodiment, sensor hub primitives 322-338 include a capture module 322 to allow selection of which of the several sensors 212-228 to capture data from, in addition to configuring the range and desired sampling rate. The capture module 322 further allows the sensor hub processor 202 to place any of the unneeded or inactive sensors 214-228 into a low-power mode to conserve power. Another primitive includes a data delivery module 324 that is used to facilitate configuration of the sensor hub processor 202 to stream data to the application processor 108 to optimize for latency while still maintaining transport efficiency. The data delivery module 324 or this mode may be used when the application processor 108 is awake or active. Alternatively, if a user (e.g., an end-user of a mobile computing device) is not interacting with the (mobile) computing device, the application processor 108 may go to sleep and configure the sensor hub processor 202 to collect the relevant data in the background and aggregate or persist the data at a storage medium. During the data delivery mode, the application processor 108 may periodically wake up and retrieve the stored data from the storage medium and perform the necessary tasks, such as context recognition.

Another primitive, in one embodiment, includes a processing module 326 that is used to trigger the application processor 108 to facilitate configuration of the sensor hub processor 202 to apply certain data processing functions to sensor data obtained from the sensors 214-228. These processing functions can be configurable via a set of parameters to enhance flexibility (e.g., number of samples, sliding windows, etc.). Further, these processing functions can be relatively easily expanded, as necessitated or desired, by either expanding the existing processing module 326 using the primitive adjustor 338. Primitive adjuster 338 includes a capability expansion module that can be used to expand the functionalities of an existing module, such as the processing module 326, or add a new module through software programming.

In one embodiment, the primitives 322-338 further include a condition evaluator 328 that helps facilitate configuration of the sensor hub processor 202 to perform data processing functions to combine sensor data from any one or more sensors 214-228 and evaluate the sensor data for occurrence of certain conditions. These conditions, when triggered, can result in one or more of the following actions: (1) trigger capture from new sensors; and (2) data reduction and (3) event detection. Trigger capture from new sensors refers to using a sensor 214-228 to trigger capture using the capture module 322 from a different sensor results in furthering power efficiency, since some sensors consume more than others. For example, in case of gesture recognition of a context-aware application, particular sensors, like accelerometer, gyroscope, etc., are needed to perform gesture recognition-related tasks. For example, data obtained from an accelerometer is used to detect movement of a user, which then results in starting of capture from a gyroscope (which typically consumes ten times (10X) more power). In one embodiment, capability of the application processor 108 is offloaded or outsourced to the sensor hub processor 202 to allow for low latency actions, which would not be possible if the capability remained with the application processor 108 because that would require the application processor 108 to be awakened each time the capture is to be triggered.

Regarding data reduction and event detection, due to continuous sensing, a certain amount of data is captured, using the capture module 322, but much of that data may not contain any interesting meaning. For example, considering gesture or speech recognition, often, sensors like an accelerometer or a microphone may collect some useless data that should not require the application processor 108 to wake up or receive the useless data. At some point, the user may perform a gesture or speak words and when the sensor hub 110 is able to detect that a possible gesture (or speech) is performed (without necessarily being able to understand the gesture or speech), it wakes up the application processor 108 and send the data over. In other words and in one embodiment, the application processor 108 is only awaken and receives data if the data collected has some significance; otherwise, the duty is outsourced to and performed by the sensor hub 110 to reduce the activity load on the application processor 108 and thus, lowering the computing device's power consumption.

For example, in case of gesture recognition, the first two stages of the gesture recognition pipeline are not computationally intensive and can be offloaded to the sensor hub 110. These stages enable detection of whether a movement was performed that resembles a gesture, without knowing the type of the gesture. Doing so can result in dropping of more than 95% of the original data when a gesture is not being performed and thus, waking up the IA, application processor 108, much less often. For the other 5% data, the application processor 108 may be awaken and the highly compute intensive stage that performs the gesture recognition is performed on the IA. This workload partitioning approach can be generalized across several interface pipelines including detection, speech recognition, speaker identification, and the like.

Continuing with the primitives 304, virtual sensors 330 serve as a primitive that can be used to provide high-level data (e.g., whether the computing device is face up, etc.) as opposed to the raw sensor data (obtained from or calculated by the sensors 214-228). Some virtual sensors 330 (e.g., orientation, heading, etc.) can be calculated efficiently in the sensor hub 110 and results in major data reduction if the original sensor data is not needed. Further, these virtual sensors 330 can trigger certain events and wakeup the application processor 108 accordingly.

Other primitives 304 include a calibrator 332, a time-stamping module 334, a power manager 336, and a primitive adjustor 338. Since some sensors (e.g., compass) may require frequent calibration, the calibrator 332 may be used to apply its calibration functions to perform various calibration tasks and deliver the calibration (or calibrated) data to the application processor 108. Since it might be important to maintain accurate time-stamps of sensor samples to enable accurate context recognition, the time-stamping module 334 may be used with the sensor hub's own built-in clock to synchronize the time data with the application processor 108 periodically to perform and register time-sampling of various activities relevant to a context-aware application. The time data may be shared with the application processor 108 as time-stamps that are sent along with the time data samples. Power manager 336 facilitates management of power at the sensor hub 110 so it is done autonomously and independently of the application processor 108. For example, the power manager 336 may switch the sensor hub 110 to a low power state (e.g., in-between successive data sample acquisitions) while the application processor 108 may be on a high power state. Primitive adjustor 338 allows for programming in new primitives to the list of sensor hub primitives 304 and/or (re)programming the existing primitives 304 to add or delete certain capabilities.

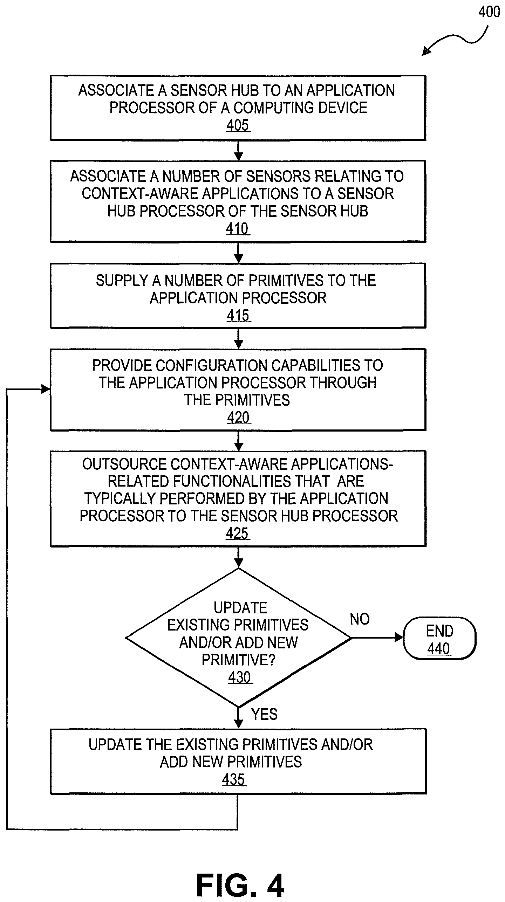

**Figure 4** illustrates a method for outsourcing processor context-aware application-related functions to a sensor hub according to one embodiment of the invention. Method 400 may be performed by processing logic that may comprise hardware (e.g., circuitry, dedicated logic, programmable logic, etc.), software (such as instructions run on a processing device), or a combination thereof. In one embodiment, method 400 is performed by sensor hub 110 of **Figure 1****.**

Method 400 starts at block 405 with associating a sensor hub to an application processor of a computing device (e.g., mobile or handheld computing device). The computing device hosts one or more context-aware applications. In one embodiment, at block 410, a plurality of sensors relating to the context-aware applications is associated with a sensor hub processor of the hardware architecture of the sensor hub. In one embodiment, the sensor hub may be placed on the same core of a chipset where the application processor resides or discretely on another chipset. In one embodiment, a set of software modules are programmed into the software architecture of the sensor hub as primitives and supplied to the application processor of the computing system at block 415. As aforementioned, the primitives (e.g., trigger, capture, and processing) are configured by the middleware running on the application processor, but they are implemented in the sensor hub software, exposed through a sensor hub API of the application processor, and requested, triggered, and configured through the application processor. In one embodiment, subsequent updates may be made to the primitives using a primitives adjuster or adjustment module as provided by the sensor hub software modules 304 as described with reference to **Figure 3B****.** These primitive changes or updates may include editing, moving, and/or removing any number of existing primitives, and adding any number and types of new primitives.

At block 420, these primitives are provided to the application processor to provide the application processor a novel capability to configure the sensor hub processor to perform various functionalities and tasks relating to activities associated with the context-aware applications of the computing system. This way, in one embodiment, the functionalities or activities that are typically performed by the application processor are outsourced to the sensor hub processor at block 425. For example, the sensors that are typically managed by the application processor directly are, in one embodiment, managed by the sensor hub processor thus relieving the application processor of many of its tasks relating to the context-aware applications. This allows the application processor to sleep and consequently, reducing overall power consumption.

At block 430, a determination is made as to whether any of the existing primitives are to be updated (e.g., expanded or reduced) and/or any new primitives are to be added. If yes, using a primitive adjustor, the update and/or addition is performed at block 435 and the process continues with configuration of the sensor hub processor by the application processor at block 420. If not, the process ends at block 440.

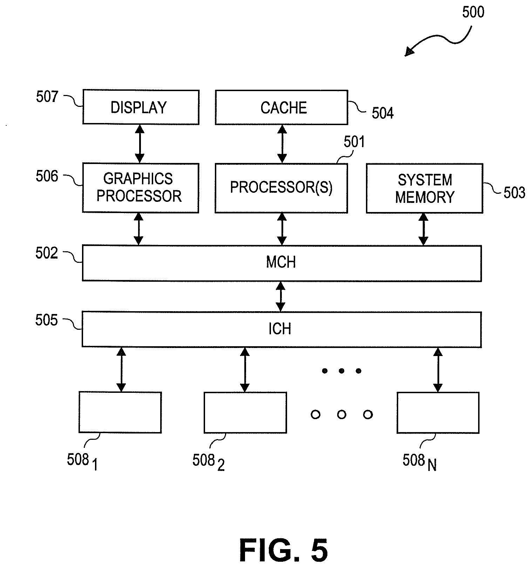

**Figure 5** illustrates a computing system 500 capable of employing a sensor hub110 of **Figure 1****,** respectively, according to one embodiment of the invention. The exemplary computing system of **Figure 5** includes: 1) one or more processor 501 at least one of which may include features described above; 2) a memory control hub (MCH) 502; 3) a system memory 503 (of which different types exist such as double data rate RAM (DDR RAM), extended data output RAM (EDO RAM) etc.); 4) a cache 504; 5) an input/output (I/O) control hub (ICH) 505; 6) a graphics processor 506; 7) a display/screen 507 (of which different types exist such as Cathode Ray Tube (CRT), Thin Film Transistor (TFT), Liquid Crystal Display (LCD), DPL, etc.; and 8) one or more I/O devices 508.

The one or more processors 501 execute instructions in order to perform whatever software routines the computing system implements. The instructions frequently involve some sort of operation performed upon data. Both data and instructions are stored in system memory 503 and cache 504. Cache 504 is typically designed to have shorter latency times than system memory 503. For example, cache 504 might be integrated onto the same silicon chip(s) as the processor(s) and/or constructed with faster static RAM (SRAM) cells whilst system memory 503 might be constructed with slower dynamic RAM (DRAM) cells. By tending to store more frequently used instructions and data in the cache 504 as opposed to the system memory 503, the overall performance efficiency of the computing system improves.

System memory 503 is deliberately made available to other components within the computing system. For example, the data received from various interfaces to the computing system (e.g., keyboard and mouse, printer port, Local Area Network (LAN) port, modem port, etc.) or retrieved from an internal storage element of the computer system (e.g., hard disk drive) are often temporarily queued into system memory 503 prior to their being operated upon by the one or more processor(s) 501 in the implementation of a software program. Similarly, data that a software program determines should be sent from the computing system to an outside entity through one of the computing system interfaces, or stored into an internal storage element, is often temporarily queued in system memory 503 prior to its being transmitted or stored.

The ICH 505 is responsible for ensuring that such data is properly passed between the system memory 503 and its appropriate corresponding computing system interface (and internal storage device if the computing system is so designed). The MCH 502 is responsible for managing the various contending requests for system memory 503 access amongst the processor(s) 501, interfaces and internal storage elements that may proximately arise in time with respect to one another.

One or more I/O devices 508 are also implemented in a typical computing system. I/O devices generally are responsible for transferring data to and/or from the computing system (e.g., a networking adapter); or, for large scale non-volatile storage within the computing system (e.g., hard disk drive). ICH 505 has bi-directional point-to-point links between itself and the observed I/O devices 508.

Portions of various embodiments of the present invention may be provided as a computer program product, which may include a computer-readable medium having stored thereon computer program instructions, which may be used to program a computer (or other electronic devices) to perform a process according to the embodiments of the present invention. The machine-readable medium may include, but is not limited to, floppy diskettes, optical disks, compact disk read-only memory (CD-ROM), and magneto-optical disks, ROM, RAM, erasable programmable read-only memory (EPROM), electrically EPROM (EEPROM), magnet or optical cards, flash memory, or other type of media/machine-readable medium suitable for storing electronic instructions.

In the foregoing specification, the invention has been described with reference to specific exemplary embodiments thereof. It will, however, be evident that various modifications and changes may be made thereto without departing from the scope of the invention as set forth in the appended claims. The Specification and drawings are, accordingly, to be regarded in an illustrative rather than a restrictive sense

## Claims

1. A method for outsourcing functionalities related to context aware applications comprising:
allocating (425), from an application processor (108) to a sensor hub processor (202) of a sensing subsystem (110) a plurality of functionalities associated with one or more context-aware applications including gesture recognition at the application processor (108), wherein the sensing subsystem (110) is operable when the application processor is asleep and wherein said functionalities are provided through software modules running at the sensor hub processor; and
performing the plurality of functionalities associated with the one or more applications using one or more sensors (214-228) coupled to the sensing subsystem (110),
**characterised in that** the application processor (108), in response to a gesture recognition request, configures the sensing subsystem (110) to capture data from an accelerometer (222), trigger a gyroscope (220) if movement is detected from the accelerometer (222), perform gesture spotting, evaluate sensor data for occurence of certain conditions and send data to the application processor if said conditions are satisfied.

2. The method of claim 1, wherein configuring comprises performing on-demand configuration of the sensor hub processor (202) to adopt the plurality of functionalities to be used in future transactions relating to the one or more applications.

3. The method of claim 2, further comprising updating one or more of the functionalities at the sensor hub processor (202).

4. The method of claim 3, further comprising adding or removing one or more functionalities at the sensor hub processor (202).

5. The method of claim 1, wherein the sensor hub processor (202) manages activities of the one or more sensors (214-228), wherein managing includes obtaining data from the one or more sensors (214-228) while the application processor sleeps, wherein the plurality of functionalities include one or more of capturing data, triggering the one or more sensors (214-228), processing the captured data including filtering the captured data, delivering the processed data, calibrating, time-sampling the captured data, and managing power including lower power consumption, wherein the activities are based on user actions relating to the one or more applications.

6. A system for outsourcing functionalities related to context aware applications comprising:
a sensors hub processor (202) of a sensing subsystem (110);
an application processor (108);
a first logic to allocate, from the application processor (108) to the sensor hub processor (202), a plurality of functionalities associated with one or more context-aware applications including gesture recognition at the application processor, wherein the sensing subsystem (110) is operable when the application processor is asleep and wherein said functionalities are provided through software modules running at the sensor hub processor; and
a second logic to perform the plurality of functionalities associated with the one or more applications using one or more sensors (214-228) coupled to the sensing subsystem (110),
**characterised in that** the application processor (108) is configured to, in response to a gesture recognition request, configure the sensing subsystem (110) to capture data from an accelerometer (222), trigger a gyroscope (220) if movement is detected from the accelerometer (222), perform gesture spotting, evaluate the sensor data for occurrence of certain conditions and send data to the application processor if said conditions are satisfied.

7. The system of claim 6, wherein the first logic is further configured to configure the sensor hub processor (202), wherein said configuring comprises performing on-demand configuration of the sensor hub processor (202).

8. The system of claim 7, further comprising a third logic configured to update one or more of the functionalities at the sensor hub processor (202), wherein the third logic is further configured to add or remove one or more software modules at the sensor hub processor (202).

9. The system of claim 6, wherein the sensor hub processor (202) is configured to manage activities of the one or more sensors (214-228), wherein managing includes obtaining data from the one or more sensors (214-228) while the application processor (108) sleeps, wherein the plurality of functionalities include one or more of capturing data, triggering the one or more sensors, processing the captured data including filtering the captured data, delivering the processed data, calibrating, time-sampling the captured data, and managing power including lower power consumption.

10. A computer readable storage medium including instructions that, when executed by a machine, cause the machine to perform the method steps of any of the preceding claims 1 to 5.

## Patentansprüche

1. Verfahren zum Outsourcen von Funktionalitäten, die auf kontextbewusste Anwendungen bezogen sind, Folgendes umfassend:
Zuordnen (425) von einem Anwendungsprozessor (108) zu einem Sensorhubprozessor (202) eines Erfassungsuntersystems (110) einer Vielzahl von Funktionalitäten, die mit einer oder mehreren kontextbewussten Anwendungen einschließlich Gestenerkennung am Anwendungsprozessor (108) verknüpft sind, wobei das Erfassungsuntersystem (110) betreibbar ist, wenn der Anwendungsprozessor schläft, und wobei die Funktionalitäten durch Softwaremodule bereitgestellt werden, die auf dem Sensorhubprozessor laufen; und
Durchführen der Vielzahl von Funktionalitäten, die mit der einen oder den mehreren Anwendungen verknüpft sind, unter Verwendung eines oder mehrerer Sensoren (214-228), die an das Erfassungsuntersystem (110) gekoppelt sind,
**dadurch gekennzeichnet, dass** der Anwendungsprozessor (108) in Reaktion auf eine Gestenerkennungsanforderung das Erfassungsuntersystem (110) dazu auslegt, Daten von einem Beschleunigungsmesser (222) zu erfassen, ein Gyroskop (220) auszulösen, wenn vom Beschleunigungsmesser (222) Bewegung detektiert wird, Gestenwahrnehmung durchzuführen, Sensordaten nach Eintreten gewisser Bedingungen zu beurteilen und Daten an den Anwendungsprozessor zu senden, wenn die Bedingungen erfüllt sind.

2. Verfahren nach Anspruch 1, wobei das Auslegen Durchführen einer bedarfsabhängigen Auslegung des Sensorhubprozessors (202) umfasst, um die Vielzahl von Funktionalitäten zu übernehmen, die bei künftigen Transaktionen zu verwenden sind, die auf die eine oder die mehreren Anwendungen bezogen sind.

3. Verfahren nach Anspruch 2, das ferner Aktualisieren einer oder mehrerer der Funktionalitäten auf dem Sensorhubprozessor (202) umfasst.

4. Verfahren nach Anspruch 3, das ferner Hinzufügen oder Entfernen einer oder mehrerer Funktionalitäten auf dem Sensorhubprozessor (202) umfasst.

5. Verfahren nach Anspruch 1, wobei der Sensorhubprozessor (202) Aktivitäten des einen oder der mehreren Sensoren (214-228) verwaltet, wobei das Verwalten Erhalten von Daten von dem einen oder den mehreren Sensoren (214-228) beinhaltet, während der Anwendungsprozessor schläft, wobei die Vielzahl von Funktionalitäten eines oder mehrere von Folgendem beinhaltet: Erfassen von Daten, Auslösen des einen oder der mehreren Sensoren (214-228), Verarbeiten der erfassten Daten einschließlich Filtern der erfassten Daten, Liefern der verarbeiteten Daten, Kalibrieren, Zeitabtasten der erfassten Daten und Verwalten von Leistung einschließlich geringere Leistungsaufnahme, wobei die Aktivitäten auf Benutzeraktionen basieren, die auf die eine oder die mehreren Anwendungen bezogen sind.

6. System zum Outsourcen von Funktionalitäten, die auf kontextbewusste Anwendungen bezogen sind, Folgendes umfassend:
einen Sensorhubprozessor (202) eines Erfassungsuntersystems (110);
einen Anwendungsprozessor (108);
eine erste Logik zum Zuordnen vom Anwendungsprozessor (108) zum Sensorhubprozessor (202) einer Vielzahl von Funktionalitäten, die mit einer oder mehreren kontextbewussten Anwendungen einschließlich Gestenerkennung am Anwendungsprozessor verknüpft sind, wobei das Erfassungsuntersystem (110) betreibbar ist, wenn der Anwendungsprozessor schläft, und wobei die Funktionalitäten durch Softwaremodule bereitgestellt werden, die auf dem Sensorhubprozessor laufen; und
eine zweite Logik zum Durchführen der Vielzahl von Funktionalitäten, die mit der einen oder den mehreren Anwendungen verknüpft sind, unter Verwendung eines oder mehrerer Sensoren (214-228), die an das Erfassungsuntersystem (110) gekoppelt sind,
**dadurch gekennzeichnet, dass** der Anwendungsprozessor (108) dazu ausgelegt ist, in Reaktion auf eine Gestenerkennungsanforderung das Erfassungsuntersystem (110) dazu auszulegen, Daten von einem Beschleunigungsmesser (222) zu erfassen, ein Gyroskop (220) auszulösen, wenn vom Beschleunigungsmesser (222) Bewegung detektiert wird, Gestenwahrnehmung durchzuführen, die Sensordaten nach Eintreten gewisser Bedingungen zu beurteilen und Daten an den Anwendungsprozessor zu senden, wenn die Bedingungen erfüllt sind.

7. System nach Anspruch 6, wobei die erste Logik ferner dazu ausgelegt ist, den Sensorhubprozessor (202) auszulegen, wobei das Auslegen das Durchführen einer bedarfsabhängigen Auslegung des Sensorhubprozessors (202) umfasst.

8. System nach Anspruch 7, das ferner eine dritte Logik umfasst, die dazu ausgelegt ist, eine oder mehrere der Funktionalitäten auf dem Sensorhubprozessor (202) zu aktualisieren, wobei die dritte Logik ferner dazu ausgelegt ist, ein oder mehrere Softwaremodule auf dem Sensorhubprozessor (202) hinzuzufügen oder zu entfernen.

9. System nach Anspruch 6, wobei der Sensorhubprozessor (202) dazu ausgelegt ist, Aktivitäten des einen oder der mehreren Sensoren (214-228) zu verwalten, wobei das Verwalten Erhalten von Daten von dem einen oder den mehreren Sensoren (214-228) beinhaltet, während der Anwendungsprozessor (108) schläft, wobei die Vielzahl von Funktionalitäten eines oder mehrere von Folgendem beinhaltet: Erfassen von Daten, Auslösen des einen oder der mehreren Sensoren, Verarbeiten der erfassten Daten einschließlich Filtern der erfassten Daten, Liefern der verarbeiteten Daten, Kalibrieren, Zeitabtasten der erfassten Daten und Verwalten von Leistung einschließlich geringere Leistungsaufnahme.

10. Computerlesbares Speichermedium, das Anweisungen beinhaltet, die, wenn sie von einer Maschine ausgeführt werden, bewirken, dass die Maschine die Verfahrensschritte nach einem der vorhergehenden Ansprüche 1 bis 5 durchführt.

## Revendications

1. Procédé d'externalisation de fonctionnalités relatives à des applications sensibles au contexte, consistant à :
allouer (425), d'un processeur d'applications (108) à un processeur concentrateur de capteurs (202) d'un sous-système de détection (110), une pluralité de fonctionnalités associées à une ou plusieurs applications sensibles au contexte, notamment une reconnaissance gestuelle au niveau du processeur d'applications (108), le sous-système de détection (110) étant fonctionnel quand le processeur d'applications est en veille, et lesdites fonctionnalités étant fournies par l'intermédiaire de modules exécutés au niveau du processeur concentrateur de capteurs ; et
réaliser la pluralité de fonctionnalités associées à la ou aux applications au moyen du ou des capteurs (214-228) couplés au sous-système de détection (110),
**caractérisé en ce que** le processeur d'applications (108), en réponse à une demande de reconnaissance gestuelle, configure le sous-système de détection (110) pour qu'il capture des données d'un accéléromètre (222), déclenche un gyroscope (220) si un mouvement est détecté par l'accéléromètre (222), effectue un repérage gestuel, évalue les données de capteur quant à la survenance de certaines conditions, et envoie les données au processeur d'applications si lesdites conditions sont satisfaites.

2. Procédé selon la revendication 1, dans lequel la configuration consiste à réaliser une configuration sur demande du processeur concentrateur de capteurs (202) afin d'adopter la pluralité de fonctionnalités à utiliser dans des transactions futures relatives à la ou aux applications.

3. Procédé selon la revendication 2, consistant en outre à mettre à jour une ou plusieurs des fonctionnalités au niveau du processeur concentrateur de capteurs (202).

4. Procédé selon la revendication 3, consistant en outre à ajouter ou supprimer une ou plusieurs fonctionnalités au niveau du processeur concentrateur de capteurs (202).

5. Procédé selon la revendication 1, dans lequel le processeur concentrateur de capteurs (202) gère les activités du ou des capteurs (214-228), la gestion consistant à obtenir des données du ou des capteurs (214-228) pendant que le processeur d'applications est en veille, la pluralité de fonctionnalités comprenant une ou plusieurs fonctionnalités parmi une capture de données, un déclenchement du ou des capteurs (214-228), un traitement des données capturées, en particulier un filtrage des données capturées, une fourniture des données traitées, un étalonnage, un échantillonnage temporel des données capturées, et une gestion de l'énergie, en particulier un abaissement de la consommation d'énergie, les activités étant basées sur des actions d'utilisateur relatives à la ou aux applications.

6. Système d'externalisation de fonctionnalités relatives à des applications sensibles au contexte, comprenant :
un processeur concentrateur de capteurs (202) d'un sous-système de détection (110) ;
un processeur d'applications (108) ;
une première logique destinée à allouer, du processeur d'applications (108) au processeur concentrateur de capteurs (202), une pluralité de fonctionnalités associées à une ou plusieurs applications sensibles au contexte, notamment une reconnaissance gestuelle au niveau du processeur d'applications, le sous-système de détection (110) étant fonctionnel quand le processeur d'applications est en veille, et lesdites fonctionnalités étant fournies par l'intermédiaire de modules exécutés au niveau du processeur concentrateur de capteurs ; et
une deuxième logique destinée à réaliser la pluralité de fonctionnalités associées à la ou aux applications au moyen du ou des capteurs (214-228) couplés au sous-système de détection (110),
**caractérisé en ce que** le processeur d'applications (108) est conçu pour, en réponse à une demande de reconnaissance gestuelle, configurer le sous-système de détection (110) pour qu'il capture des données d'un accéléromètre (222), déclenche un gyroscope (220) si un mouvement est détecté par l'accéléromètre (222), effectue un repérage gestuel, évalue les données de capteur quant à la survenance de certaines conditions, et envoie les données au processeur d'applications si lesdites conditions sont satisfaites.

7. Système selon la revendication 6, dans lequel la première logique est en outre conçue pour configurer le processeur concentrateur de capteurs (202), ladite configuration consistant à réaliser une configuration sur demande du processeur concentrateur de capteurs (202).

8. Système selon la revendication 7, comprenant en outre une troisième logique conçue pour mettre à jour une ou plusieurs des fonctionnalités au niveau du processeur concentrateur de capteurs (202), la troisième logique étant en outre conçue pour ajouter ou supprimer un ou plusieurs modules logiciels au niveau du processeur concentrateur de capteurs (202).

9. Système selon la revendication 6, dans lequel le processeur concentrateur de capteurs (202) est conçu pour gérer les activités du ou des capteurs (214-228), la gestion consistant à obtenir des données du ou des capteurs (214-228) pendant que le processeur d'applications (108) est en veille, la pluralité de fonctionnalités comprenant une ou plusieurs fonctionnalités parmi une capture de données, un déclenchement du ou des capteurs, un traitement des données capturées, en particulier un filtrage des données capturées, une fourniture des données traitées, un étalonnage, un échantillonnage temporel des données capturées, et une gestion de l'énergie, en particulier un abaissement de la consommation d'énergie.

10. Support de stockage lisible par ordinateur comprenant des instructions qui, lorsqu'elles sont exécutées par une machine, amènent la machine à réaliser les étapes de procédé selon l'une quelconque des revendications 1 à 5 précédentes.
